# NEUE EUROPÄISCHE PATENTSCHRIFT

(11) **EP 2 707 914 B2**
(45) Veröffentlichungstag und Bekanntmachung des Hinweises auf die Entscheidung über den Einspruch: **25.09.2024**
(45) Hinweis auf die Patenterteilung: 11.03.2015
(21) Anmeldenummer: 12728173.1
(22) Anmeldetag: 11.05.2012
(51) Int. Cl.: H01M 10/42, H01M 2/02, H01M 2/04, H01M 2/10

(54) **HV-BATTERIE, INSBESONDERE TRAKTIONSBATTERIE FÜR EIN FAHRZEUG**
HV-BATTERY, IN PARTICULAR A TRACTION BATTERY FOR A VEHICLE
BATTERIE HAUTE TENSION, NOTAMMENT BATTERIE DE PROPULSION POUR UN VÉHICULE À MOTEUR

(30) Priorität: 12.05.2011 DE 102011101352
(43) Veröffentlichungstag der Anmeldung: 19.03.2014
(73) Patentinhaber: Audi AG, 85045 Ingolstadt (DE)
(72) Erfinder: KREUTZER, Christoph, 85057 Ingolstadt (DE); FEES, Heiner, 74321 Bietigheim Bissingen (DE); VASSEN, Heinz-Willi, 85114 Buxheim (DE); SCHWARZBAUER, Robert, 86570 Inchenhofen (DE); LANG, Bardo, 85114 Buxheim (DE); PÖPPEL, Armin, 85080 Gaimersheim (DE); BÜTTNER, Karsten, 85055 Ingolstadt (DE)
(74) Vertreter: Herbst, Matthias Heinz
(86) Internationale Anmeldenummer: PCT/EP2012/002027
(87) Internationale Veröffentlichungsnummer: WO 2012/152444

(56) Entgegenhaltungen:
- EP-A1- 2 290 733
- EP-A2- 1 067 393
- US-A1- 2007 080 662

## Beschreibung

Die Erfindung betrifft eine HV-Batterie, insbesondere eine Traktionsbatterie für ein Fahrzeug, mit mehreren Zellenmodulen, die jeweils mehrere Zellen umfassen, wobei jedem Zellenmodul eine Steuerung zur Zellenüberwachung und/oder zum Zellenbalancing zugeordnet ist, wobei die Steuerungen an ein Batteriemanagement-Steuergerät für Kommunikations- und/oder Steuerungs- oder Regelzwecke angeschlossen sind.

HV-Batterien (Hochvolt-Batterien) werden z. B. als Traktionsbatterie für Hybridfahrzeuge eingesetzt. Als Batterien kommen Metallhybridbatterien oder Lithium-Ionen-Batterien zum Einsatz. Einzelne Zellen der Batterie sind in Reihe geschaltet, wodurch sich die für einen Elektromotor benötigte Spannung ergibt.

Aus der EP 1 577 966 A2 ist eine modular aufgebaute Traktionsbatterie bekannt, die eine Mehrzahl von einzelnen Batteriezellen aufweist. Die einzelnen Batteriezellen können angereiht werden, um eine Traktionsbatterie mit einer gewünschten Spannung bzw. einer gewünschten Kapazität zu erhalten.

In der US 2007/0087266 A1 ist ein modulares Batteriesystem vorgeschlagen worden, bei dem mehrere Batteriemodule in Reihe geschaltet sind. Der Zustand von Batteriemodulen wird mit einer Überwachungseinrichtung erfasst.

In der US 2009/0130541 A1 wird eine aus vielen Einzelzellen bestehende Batterie beschrieben, denen jeweils ein integrierter Schaltkreis zugeordnet ist. Dieser Schaltkreis dient als Controller zur Überwachung der Zellen, zusätzlich ist ein Kommunikationsbaustein zum Informationsaustausch mit anderen Steuerungseinrichtungen vorgesehen. Die Controller sind seitlich an den Zellen angeordnet.

Eine Traktionsbatterie mit einer Mehrzahl von Lithium-Ionen-Zellen ist aus der EP 1 526 601 A1 bekannt. Die einzelnen Zellen sind zu einem Modul zusammengefasst, ein Controller ermittelt für jedes Modul Zustandswerte und überträgt diese an einen übergeordneten Controller.

Ein spezielles Batteriemodul wird in der EP 2 244 319 A1 beschrieben. Die Batterie weist einen Überwachungsschaltkreis auf, um Zustandsgrößen einzelner Zellen zu überwachen. Daneben ist eine Schnittstelle für einen externen Controller vorhanden.

Obwohl einige der erwähnten herkömmlichen HV-Batterien modulartig aufgebaut sind, wird zumeist ein zentraler Elektronikbaustein oder eine Steuerung (Controller) benötigt, wodurch der Aufbau der HV-Batterie unflexibel ist und eine umfassende Modularisierung verhindert.

Der Erfindung liegt daher die Aufgabe zugrunde, eine HV-Batterie anzugeben, die modular aufgebaut ist und flexibel ergänzt werden kann.

Zur Lösung dieser Aufgabe ist bei einer HV-Batterie der eingangs genannten Art erfindungsgemäß vorgesehen, dass die HV-Batterie modular ausgebildet ist, indem die Zellenmodule als auf einer Platine lösbar befestigte Steckmodule ausgebildet sind und die Zellenmodule oder die Platine Vorsprünge oder Rastelemente aufweisen oder aufweist, die in Ausnehmungen des anderen Bauteils einsteckbar sind, wobei die HV-Batterie eine als Steckmodul ausgebildete Anschluss- oder Verteilerdose aufweist, die wenigstens eine der folgenden Komponenten umfasst: Einrichtungen zur HV-Verteilung, Schütze, Sicherung, Vorladeschaltung, Stromsensor und/oder wobei mehrere Batteriemanagement-Steuergeräte an einer Halterung (leadframe) oder einem Rahmen angeordnet sind.

Durch die erfindungsgemäß vorgesehene Ausbildung der Zellenmodule als Steckmodule können diese nahezu beliebig auf der Platine angeordnet werden bzw. sein, wodurch eine umfassende Modularität gegeben ist. Unterschiedliche HV-Batterien können mittels einer Platine realisiert werden, indem die Platine mehr oder weniger stark mit Zellenmodulen bestückt wird. Durch diese individuelle, auf den jeweiligen Einsatzzweck abgestimmte Bestückung kann eine Batterie mit festgelegten Eigenschaften geschaffen werden. Insbesondere können die Batteriespannung, der abgebbare Strom und die Kapazität auf diese Weise bestimmt bzw. verändert werden. Bei der erfindungsgemäßen HV-Batterie ist sogar eine spätere Änderung möglich, indem die Anzahl der Zellenmodule erhöht oder verringert wird.

Bei der erfindungsgemäßen HV-Batterie ergibt sich die Modularität dadurch, dass jedem Zellenmodul eine Steuerung zur Zellenüberwachung und/oder für das Zellenbalancing zugeordnet ist, so dass das Zellenmodul mitsamt der Steuerung auf die Platine aufgesteckt oder entfernt werden kann. Aufwändige Anschluss- oder sonstige Konfigurierarbeiten entfallen, da das Zellenmodul fest mit der Steuerung verbunden ist.

Um die Handhabung der erfindungsgemäßen HV-Batterie zu vereinfachen, ist erfindungsgemäß vorgesehen, dass die Zellenmodule oder die Platine Vorsprünge oder Rastelemente aufweisen, die in Ausnehmungen des anderen Bauteils einsteckbar sind. Auf diese Weise können Zellenmodule einfach mit geringem Aufwand entfernt oder ergänzt werden.

Gemäß einer Ausgestaltung der Erfindung kann es vorgesehen sein, dass die HV-Batterie eine als Steckmodul ausgebildete Anschluss- oder Verteilerdose aufweist, die wenigstens eine der folgenden Komponenten umfasst: Einrichtungen zur HV-Verteilung, Schütze, eine Sicherung, eine Vorladeschaltung, einen Stromsensor. Die Anschluss- oder Verteilerdose, die auch als junction box bezeichnet wird, enthält somit eine oder mehrere elektrische oder elektronische Komponenten, die zumindest optional beim Betrieb der HV-Batterie benutzt werden können. In diesem Zusammenhang wird es besonders bevorzugt, dass die Anschluss- oder Verteilerdose dieselbe Größe und/oder dasselbe Rastermaß wie die Zellenmodule aufweist. Wenn die junction box die gleiche Größe wie ein Zellenmodul aufweist, ist die Befestigung besonders leicht.

Eine weitere Ausgestaltung der Erfindung kann vorsehen, dass mehrere Batteriemanagement-Steuergeräte an einer Halterung (leadframe) oder einem Rahmen angeordnet sind. Auf diese Weise können mehrere Batteriemanagement-Steuergeräte einfach angeschlossen oder entfernt werden. Hinsichtlich des Ortes der Anbringung wird es bevorzugt, dass die Halterung oder der Rahmen an der der Platine gegenüberliegenden Seite der Zellenmodule angebracht ist.

Die Halterung (leadframe) dient gleichzeitig als Niederhalter und hält die einzelnen Zellenmodule auf der Platine. Der leadframe umfasst Kontakte und Verbindungsleitungen zum Kontaktieren der Zellenmodule, an seinen Enden weist er Anschlüsse auf, um z. B. mehrere leadframes miteinander zu verbinden.

Daneben betrifft die Erfindung ein Kraftfahrzeug. Das erfindungsgemäße Kraftfahrzeug zeichnet sich dadurch aus, dass es eine HV-Batterie der beschriebenen Art aufweist.

Weitere Vorteile und Einzelheiten der Erfindung werden anhand eines Ausführungsbeispiels unter Bezugnahme auf die Zeichnungen erläutert. Die Zeichnungen sind schematische Darstellungen und zeigen:
- Fig. 1: ein Schaltbild einer erfindungsgemäßen HV-Batterie;
- Fig. 2: ein perspektivische Ansicht einzelner Zellenmodule;
- Fig. 3: eine perspektivische Ansicht der wesentlichen Komponenten einer erfindungsgemäßen HV-Batterie; und
- Fig. 4: eine perspektivische Ansicht einer erfindungsgemäßen HV-Batterie.

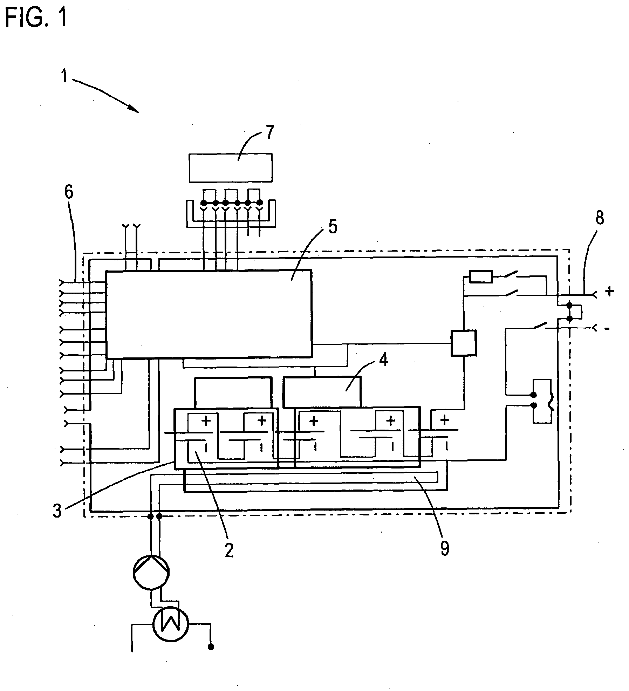

Das in Fig. 1 gezeigte Schaltbild einer HV-Batterie 1 zeigt deren wesentliche Komponenten. Die HV-Batterie 1 besteht aus einer Mehrzahl von Zellen 2, die in Reinschaltung angeschlossen sind. Mehrere Zellen 2 sind zu einem Zellenmodul 3 zusammengefasst. In dem in Fig. 1 gezeigten Ausführungsbeispiel umfasst jedes Zellenmodul zwei Zellen 2. Es sind jedoch auch Ausführungen denkbar, bei denen jedes Zellenmodul 3 z. B. drei, vier oder fünf Zellen umfasst.

Jedem Zellenmodul 3 ist eine Steuerung 4 zur Zellenüberwachung und zum Zellenbalancing zugeordnet. Durch das Zellenbalancing wird sichergestellt, dass die einzelnen Zellen 2 eines Zellenmoduls 3 zumindest näherungsweise gleichmäßig entladen werden, wodurch sich deren Lebensdauer erhöht.

Die einzelnen Steuerungen 4 sind an ein übergeordnetes Batteriemanagement-Steuergerät 5 angeschlossen, das Kommunikationsanschlüsse 6 aufweist, um Informationen mit externen Controllern eines Fahrzeugs auszutauschen. Darüber hinaus kann das Batteriemanagement-Steuergerät 5 durch einen externen Schalter 7 abgeschaltet werden, um die HV-Batterie 1 beispielsweise für Wartungs- oder Reparaturzwecke abzuschalten.

Zusätzlich weist die HV-Batterie 1 einen Ausgang 8 auf, der mit einem Elektromotor oder anderen elektrisch angetriebenen Komponenten eines Fahrzeugs verbunden ist. In die HV-Batterie 1 ist ein Kühlmittelkanal 9 integriert, um eine Temperierung der Zellen 2 zu übermöglichen.

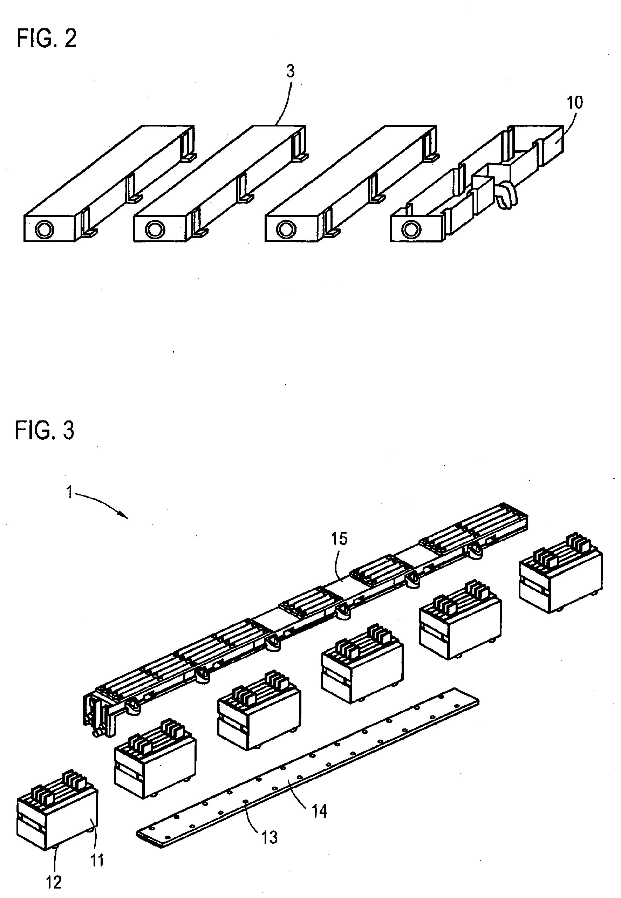

Fig. 2 zeigt mehrere Zellenmodule in einer perspektivischen Ansicht. In dem dargestellten Ausführungsbeispiel sind drei Zellenmodule 3 vorgesehen, die jeweils ein quaderförmiges Gehäuse aufweisen. Jedes Zellenmodul enthält mehrere Zellen. Zusätzlich ist in Fig. 2 eine Anschlussdose (junction box) 10 dargestellt, die für eine HV-Verteilung zuständig ist.

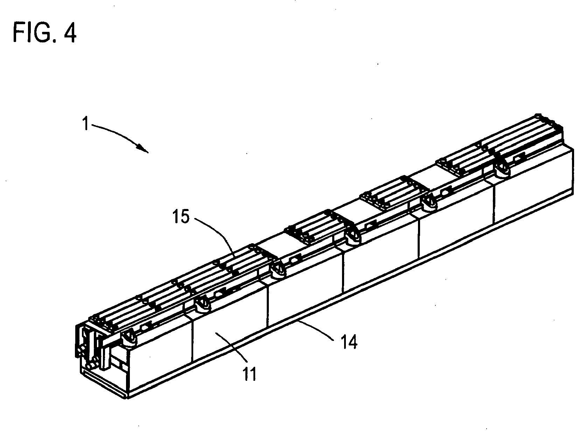

Fig. 3 zeigt die wesentlichen Bestandteile der HV-Batterie 1 in einer perspektivischen Ansicht, Fig. 4 zeigt dieselbe HV-Batterie 1 im zusammengebauten Zustand. Die einzelnen Zellenmodule 11 weisen an ihrer Unterseite Rastvorsprünge 12 auf, die in Ausnehmungen 13 einer Platine 14 einsteckbar sind. Auf diese Weise können mehrere Zellenmodule 11 angereiht werden, wodurch sich der gewünschte modulare Aufbau der HV-Batterie 1 ergibt. Die Batterie 1 umfasst ferner einen Rahmen (lead frame) 15, an dem mehrere Batteriemanagement-Steuergeräte 5 angeordnet sind. Im zusammengebauten Zustand ist der Rahmen 15 an der der Platine 14 gegenüberliegenden Seite der Zellenmodule 11 angeordnet.

## Patentansprüche

1. HV-Batterie (1), insbesondere Traktionsbatterie für ein Fahrzeug, mit mehreren Zellenmodulen (3, 11), die jeweils mehrere Zellen (2) umfassen, wobei jedem Zellenmodul (3, 11) eine Steuerung (4) zur Zellenüberwachung und/oder zum Zellenbalancing zugeordnet ist, wobei die Steuerungen an ein Batteriemanagement-Steuergerät (5) für Kommunikations- und/oder Steuerungs- oder Regelzwecke angeschlossen sind,
**dadurch gekennzeichnet,**
**dass** die HV-Batterie (1) modular ausgebildet ist, indem die Zellenmodule (3, 11) als auf einer Platine (14) lösbar befestigte Steckmodule ausgebildet sind und die Zellenmodule (3, 11) oder die Platine (14) Vorsprünge (12) oder Rastelemente aufweisen oder aufweist, die in Ausnehmungen (13) des anderen Bauteils einsteckbar sind, wobei die HV-Batterie (1) eine als Steckmodul ausgebildete Anschluss- oder Verteilerdose aufweist, die wenigstens eine der folgenden Komponenten umfasst: Einrichtungen zur HV-Verteilung, Schütze, Sicherung, Vorladeschaltung, Stromsensor und/oder wobei mehrere Batteriemanagement-Steuergeräte (5) an einer Halterung (leadframe) oder einem Rahmen (15) angeordnet sind.

2. HV-Batterie nach Anspruch 1,
**dadurch gekennzeichnet,**
**dass** die Anschluss- oder Verteilerdose dieselbe Größe und/oder dasselbe Rastermaß wie die Zellenmodule (3, 11) aufweist.

3. HV-Batterie nach Anspruch 1,
**dadurch gekennzeichnet,**
**dass** die Halterung (leadframe) oder der Rahmen (15) an der der Platine (14) gegenüberliegenden Seite der Zellenmodule (3, 11) angebracht ist.

4. Kraftfahrzeug,
**dadurch gekennzeichnet,**
**dass** es eine HV-Batterie (1) nach einem der Ansprüche 1 bis 3 aufweist.

## Claims

1. HV-battery (1), in particular a traction battery for a vehicle, comprising a plurality of cell modules (3, 11) which each include a plurality of cells (2), an open-loop control unit (4) being assigned to each cell module (3, 11) for cell monitoring and/or cell balancing, the open-loop control units being connected to an open-loop battery management control device (5) for communication purposes and/or for open-loop or closed-loop control purposes, **characterised in that** the HV battery (1) has a modular design owing to the configuration of the cell modules (3, 11) as plug-in modules which are detachably fastened to a printed circuit board (14) and the cell modules (3, 11) or the printed circuit board (14) have/has projections (12) or latching elements which can be inserted into recesses (13) of the other component, wherein the HV-battery has a junction box or distribution box designed as a plug-in module, which comprises at least one of the following components: apparatuses for HV distribution, contactors, fuse, precharge circuit, current sensor and/or wherein several open open-loop battery management control devices (5) are arranged on a mounting (lead frame) or a frame (15).

2. HV battery according to claim 1, **characterised in that** the junction box or distribution box is the same size and/or has the same contact spacing as the cell modules (3, 11).

3. HV battery according to claim 1, **characterised in that** the mounting (lead frame) or the frame (15) is attached to the side of the cell modules (3, 11) that is opposite the printed circuit board (14).

4. Motor vehicle, **characterised in that** it comprises a HV battery (1) according to any of claims 1 to 3.

## Revendications

1. Batterie haute tension (1), en particulier batterie de propulsion pour un véhicule automobile, comportant plusieurs modules élémentaires (3, 11), comprenant respectivement plusieurs éléments (2), dans laquelle il est affecté à chaque module élémentaire (3, 11) une commande (4) permettant de contrôler et/ou d'équilibrer les éléments, les commandes étant connectées à un appareil de commande de gestion de batterie (5) à des fins de communication et/ou de commande ou de régulation,
**caractérisée en ce que** :
la batterie haute tension (1) a une conception modulaire telle que les modules élémentaires (3, 11) soient conçus en modules d'enfichage fixables de manière amovible sur une platine (14) et que les modules élémentaires (3, 11) ou la platine (14) présentent ou présente des saillies (12) ou des éléments d'arrêt qui peuvent être enfichés dans des évidements (13) de l'autre composant, dans lequel la batterie haute tension (1) présente une prise de courant ou une boîte de distribution conformée en module d'enfichage, qui comprend au moins l'un des composants suivants : dispositifs de distribution haute tension, contacteurs, sûreté, circuit de pré-chargement, capteur de courant et/ou dans lequel plusieurs appareils de commande de gestion de batterie (5) sont aménagés sur un support (leadframe) ou un châssis.

2. Batterie haute tension selon la revendication 1,
**caractérisée en ce que** :
la prise de courant ou la boîte de distribution présente la même grandeur et/ou la même dimension de trame que les modules élémentaires (3, 11).

3. Batterie haute tension selon la revendication 1,
**caractérisée en ce que** :
le support (leadframe) ou le châssis (15) est monté du côté des modules élémentaires (3, 11) en regard de la platine (14).

4. Véhicule automobile,
**caractérisé en ce que** :
il présente une batterie haute tension (1) selon l'une quelconque des revendications 1 à 3.
